# EUROPÄISCHE PATENTSCHRIFT

(11) **EP 1 359 556 B1**
(45) Veröffentlichungstag und Bekanntmachung des Hinweises auf die Patenterteilung: **19.01.2005**
(21) Anmeldenummer: 03007012.2
(22) Anmeldetag: 27.03.2003
(51) Int. Cl.: G08G 1/09, G08G 1/0967, G01C 21/34

(54) **Navigationssystem mit dynamischer Routenplanung**
Navigation system comprising dynamic route planning
Système de navigation avec planification d'itinéraire

(30) Priorität: 30.04.2002 DE 10219500
(43) Veröffentlichungstag der Anmeldung: 05.11.2003
(73) Patentinhaber: SIEMENS AKTIENGESELLSCHAFT, 80333 München (DE)
(72) Erfinder: Hendriks, Antonius Johannes, 5509 NR Veldhoven (NL); Hofman, Peter, 35392 Giessen (DE)

(56) Entgegenhaltungen:
- WO-A-02/17268
- DE-A- 19 644 689
- DE-A- 19 748 077
- DE-A- 19 859 078
- PATENT ABSTRACTS OF JAPAN vol. 1995, no. 06, 31. Juli 1995 (1995-07-31) & JP 07 083685 A (TOYOTA MOTOR CORP), 28. März 1995 (1995-03-28)

## Beschreibung

Die Erfindung betrifft ein Navigationssystem für ein Kraftfahrzeug mit einer Recheneinheit, die mit einer Eingabeeinheit, einer Anzeigeeinheit, einem Speicherelement, das eine Landkartendatei enthält, einem Modul zum Empfang von Verkehrsinformationen und Mitteln zur Positionsbestimmung verbunden ist und zur Durchführung einer dynamischen Routenplanung unter Berücksichtigung der empfangenen Verkehrsinformationen ausgelegt ist, wobei das Navigationssystem weiterhin Mittel zur Beeinflussung der bei der dynamischen Routenplanung zu berücksichtigenden empfangenen Verkehrsinformationen durch einen Benutzer enthält. Ein derartiges Navigationssystem ist aus der WO 02/17268 A1 bekannt.

Ein Navigationssystem mit dynamischer Routenplanung ist aus der DE 196 44 689 A1 bekannt. Das bekannte Navigationssystem berechnet zunächst eine erste statische Route ohne Berücksichtigung der empfangenen Verkehrsinformationen und anschließend eine zweite dynamische Route unter Berücksichtigung der empfangenen Verkehrsinformationen. Ist die Fahrzeit auf der zweiten Route voraussichtlich kürzer als auf der ersten Route, so werden beide Routen dem Fahrer zur Auswahl angeboten. Anschließend werden Routeninformationen zu der Route ausgegeben, die nach der Ausgabe der Auswahlinformation eingeschlagen wurde. In einer Ausführungsform ist vorgesehen, dass die Bedingungen, unter denen die Auswahlinformation an die Ausgabevorrichtung geliefert wird, vom Benutzer des Navigationssystems festlegbar sind. Beispielhaft ist genannt, dass der Benutzer definieren kann, dass er erst dann über das Vorliegen der zweiten Route informiert werden möchte, falls die voraussichtliche Fahrzeit auf der zweiten Route um eine definierbare Zeitspanne, beispielsweise 15 Minuten, kürzer als die voraussichtliche Fahrzeit auf der ersten Route ist. Bei dem bekannten Navigationssystem kann der Benutzer somit lediglich festlegen unter welchen Bedingungen ihm eine zweite dynamische Route zur Auswahl angezeigt werden soll. Der Benutzer hat sonst jedoch keinen weiteren Einfluss auf die Routenplanung. Der Benutzer weiß daher insbesondere auch nicht, aus welchem Grund ihm eine neue Route angeboten wird. Da auch vielfach Verkehrsinformationen, die der Routenneuplanung zugrunde gelegt werden, ungenau oder für die Routenplanung unvollständig sind, kann dies zur Unzufriedenheit des Benutzers mit dem Navigationssystem führen.

Aufgabe der Erfindung ist es daher, ein Navigationssystem anzugeben, dessen dynamische Routenplanung für den Benutzer plausibler ist als bei bekannten Systemen, so dass eine dynamisch geplante Route eher von dem Benutzer akzeptiert wird.

Die Aufgabe wird bei einem gattungsgemäßen Navigationssystem dadurch gelöst, dass mindestens ein Entscheidungskriterium für die Berechnung einer neuen Route nach dem Empfang von Verkehrsinformationen voreinstellbar ist. Der Benutzer hat daher die Möglichkeit, dem Navigationssystem mitzuteilen, wie und in welcher Weise die empfangenen Verkehrsinformationen zu berücksichtigen sind. Hierdurch wird eine größere Akzeptanz der dynamisch, d.h. unter Einbeziehung der Verkehrsinformationen, geplanten Route erreicht.

Die von außerhalb des Fahrzeugs an das Navigationssystem übermittelte Verkehrsinformation enthält im Falle einer Verkehrsbehinderung häufig lediglich die Angabe, wo sich der Stau befindet, beispielsweise durch die Angabe von zwei Autobahnanschlussstellen, sowie die Länge des Staus. Aus der Länge des Staus kann jedoch nicht ohne weiteres auf die hieraus resultierende Fahrzeitverlängerung geschlossen werden. Daher kann insbesondere vorgesehen sein, dass der Benutzer die bei einer Verkehrsinformation zu berücksichtigende Fahrzeitverlängerung beeinflussen kann. Dies kann beispielsweise derart geschehen, dass die empfangenen Verkehrsinformationen auf der Anzeigeeinheit dargestellt werden und der Benutzer anhand der angezeigten Staulänge eine nach seiner Erfahrung zu berücksichtigende Fahrzeitverlängerung hierzu dem Navigationssystem mitteilt. Ein Benutzer kann eine derartige Information beispielsweise dadurch erlangt haben, dass er häufiger die Strecke befährt, auf der der genannte Stau auftritt. Dadurch, dass der Benutzer selbst aktiv in die dynamische Routenplanung auf diese Weise eingreifen kann, wird sein Vertrauen in das Planungsergebnis steigen.

In einer besonderen Ausführungsform ist vorgesehen, dass eine oder mehrere Verkehrsinformationen aus den empfangenen Verkehrsinformationen derart auswählbar sind, dass die ausgewählten Verkehrsinformationen bei der Routenberechnung berücksichtigt bzw. nicht berücksichtigt werden. Dem Benutzer werden hierbei die empfangenen Verkehrsinformationen wiederum auf der Anzeigeeinheit angezeigt. Der Benutzer kann nun für jede einzelne Verkehrsinformation auswählen, ob sie für die Routenplanung berücksichtigt werden soll oder nicht. Beispielsweise kann der Benutzer somit eine Verkehrsinformation als nicht zu berücksichtigen kennzeichnen, wenn der damit verbundene Stau zwar auf seiner voraussichtlichen Fahrstrecke liegt, der Benutzer sich jedoch noch sehr weit von dieser Stelle entfernt befindet. Betrifft die Verkehrsinformation beispielsweise einen Stau im morgendlichen Berufsverkehr eines Ballungsraumes und der Benutzer wird diesen Ballungsraum erst dann erreichen, wenn der morgendliche Berufsverkehr bereits abgeebbt ist, so kann die entsprechende Verkehrsinformation als nicht zu berücksichtigend von dem Benutzer markiert werden.

In einer besonderen Ausführungsform ist vorgesehen, dass Informationen über die bei der Routenberechnung berücksichtigte bzw. nicht berücksichtigte Verkehrsinformation ausgegeben, insbesondere auf der Anzeigeeinheit angezeigt werden. Der Benutzer erhält somit auch nach Durchführung der dynamischen Routenplanung noch eine Rückmeldung, inwieweit die empfangenen Verkehrsinformationen bei der Routenplanung berücksichtigt worden sind. Auch hierdurch wird eine höhere Akzeptanz beim Benutzer erreicht, da er nachvollziehen kann, wie die berechnete Route zustande gekommen ist. Dem Benutzer kann dabei insbesondere nochmals die Möglichkeit gegeben werden, einzelne Verkehrsinformationen zu eliminieren und eine Routenneuberechnung durchführen zu lassen.

Es ist erfindungsgemäß vorgesehen, dass mindestens ein Entscheidungskriterium für die Berechnung einer neuen Route nach dem Empfang von Verkehrsinformationen voreinstellbar ist. Auf diese Weise können grundsätzliche Kriterien festgelegt werden, die bei der Routenberechnung zu berücksichtigen sind. Bei dem Entscheidungskriterium kann es sich insbesondere um eine maximal durch den Benutzer akzeptierte Fahrzeitverlängerung auf Grund einer mit den Verkehrsinformationen übermittelten Verkehrsbehinderung auf einer bereits geplanten Strecke handeln. Durch die Voreinstellung wird also nicht wie bei dem eingangs genannten System lediglich die Ausgabe einer zweiten Route davon abhängig gemacht, ob die voraussichtliche Fahrzeit auf der zweiten Route um eine definierte Zeitspanne kürzer als die voraussichtliche Fahrzeit auf der ersten Route ist. Vielmehr wird eine neue Routenberechnung erst dann durchgeführt, wenn sich die Fahrzeit auf der bereits berechneten Route auf Grund der empfangenen Verkehrsinformation um mehr als eine voreingestellte Zeitdauer erhöht. Die Anzahl der durchzuführenden Routenneuberechnungen kann dadurch verringert werden.

In einer besonderen Ausführungsform ist vorgesehen, dass zunächst eine statische Route ohne Berücksichtigung von Verkehrsinformationen und anschließend eine dynamische Route mit Berücksichtigung der empfangenen Verkehrsinformationen durchgeführt wird. Hierdurch kann die Zeit bis zur ersten Ausgabe einer Fahrinformation klein gehalten werden, falls der Benutzer an einer Beeinflussung der zu berücksichtigenden Verkehrsinformationen nicht interessiert ist.

Bei dem Modul zum Empfang von Verkehrsinformationen handelt es sich vorzugsweise um einen RDS-, insbesondere einen RDS-TMC-Rundfunkempfänger oder ein Mobiltelefon. Mit beiden Systemen ist eine flächendeckende Versorgung mit Verkehrsinformationen gewährleistet.

Ein erfindungsgemäßes Verfahren zur Durchführung einer dynamischen Routenplanung in einem Navigationssystem für Kraftfahrzeuge weist die folgenden Verfahrensschritte auf:
- Empfangen von Verkehrsinformationen,
- optische Wiedergabe der Verkehrsinformationen,
- Auswerten von Auswahlbefehlen zu den Verkehrsinformationen zur Festlegung ausgewählter Verkehrsinformationen,
- Durchführung einer Routenberechnung unter Berücksichtigung der ausgewählten Verkehrsinformationen.
Mit dem erfindungsgemäßen Verfahren kann der Benutzer direkt Einfluss auf die zu berücksichtigenden Verkehrsinformationen nehmen, wodurch eine höhere Akzeptanz der berechneten Route erreicht wird.

In einer besonderen Ausführungsform ist vorgesehen, dass vor der Routenplanung die Verkehrsinformationen auf Grund von einem Benutzer eingegebener Korrekturdaten verändert werden.

Die Erfindung wird nachfolgend anhand eines Ausführungsbeispiels und der Zeichnung näher erläutert. Es zeigen:
- Figur 1: die Komponenten eines Navigationssystems
- Figur 2: ein Ablaufdiagramm des Verfahrens zur Routenplanung

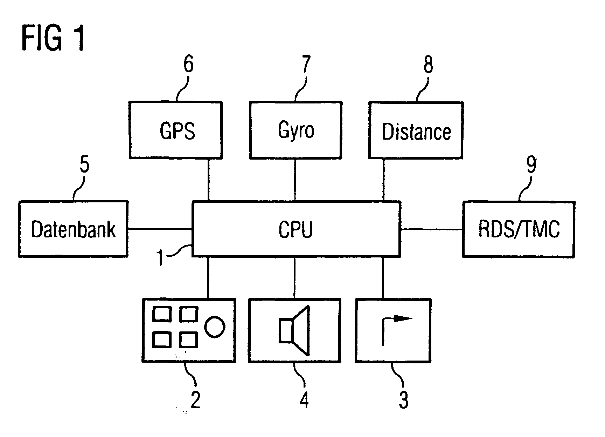

In Figur 1 sind die Komponenten eines Navigationssystems für Kraftfahrzeuge schematisch dargestellt. Zentraler Bestandteil des Navigationssystems ist die Recheneinheit 1, die auch die erforderlichen Arbeitsspeicher enthält. Mit der Recheneinheit 1 ist eine Bedieneinheit 2 verbunden, über die beispielsweise der Zielort eingegeben oder ausgewählt oder die empfangenen Verkehrsinformationen editiert werden können. Die Bedieneinheit 2 enthält dazu ein oder mehrere Bedienelemente. Die Bedieneinheit 2 kann im gleichen Gehäuse wie die Recheneinheit 1 untergebracht sein, jedoch kann die Bedieneinheit 2 auch als Fernbedienung ausgebildet sein, die mit der Recheneinheit 1 beispielsweise über eine optische Schnittstelle oder eine Funkschnittstelle in Verbindung steht.
Mit der Recheneinheit 1 ist eine optische Anzeigeeinheit 3 verbunden, über die eine Kartendarstellung und Zielführungsinformationen sowie sonstige Informationen, wie insbesondere die empfangenen Verkehrsinformationen, ausgegeben werden. Nach der Durchführung einer Routenberechnung werden die Zielführungsinformationen auch über einen Lautsprecher 4 akustisch ausgegeben.

Die Recheneinheit 1 ist ferner mit einem Speicherelement 5 verbunden, das Landkartendaten für die Routenberechnung enthält. Diese Daten sind beispielsweise auf einer CD-ROM oder einer DVD abgespeichert. In diesem Fall enthält das Navigationssystem ein CD-ROM- bzw. DVD-Laufwerk, das mit der Recheneinheit 1 verbunden ist. Anhand der Landkartendaten kann von der Recheneinheit 1 bei bekanntem Start- und Zielort in bekannter Weise eine Berechnung einer statischen Route durchgeführt werden, die dann über die optische Ausgabeeinheit 3 ausgegeben werden kann.

Zur Bestimmung der aktuellen Fahrzeugposition enthält das Navigationssystem ferner einen Empfänger 6 zum Empfang von Satellitennavigationssignalen. Um eine von Satelliten unabhängige Positionsbestimmung durchführen zu können, enthält das Navigationssystem weiterhin einen Richtungssensor 7 und einen Wegsensor 8, die ebenfalls mit der Recheneinheit 1 verbunden sind, so dass mit Hilfe eines geeigneten Computerprogramms mit diesen Signalen eine Positionsbestimmung ermöglicht wird.

Weiterhin ist die Recheneinheit 1 im dargestellten Beispiel zusätzlich mit einem Rundfunkempfänger 9 verbunden, der zum Empfang von RDS-TMC-Signalen ausgebildet ist. Somit können empfangene Verkehrsinformationen vom Rundfunkempfänger 9 an die Recheneinheit 1 weitergeleitet und bei der Routenberechnung berücksichtigt werden. Alternativ können Verkehrsinformationen auch über ein Mobilfunkgerät, insbesondere nach dem GSM- oder UMTS-Standard empfangen und an die Recheneinheit weitergeleitet werden.

Wünscht der Benutzer vor Fahrtantritt nun eine Routenberechnung, so muss zunächst der Zielort eingegeben werden. Der gegenwärtige Standort des Fahrzeuges wird anhand der empfangenen Satellitennavigationssignale automatisch bestimmt. Über den Rundfunkempfänger 9 werden Verkehrsinformationen empfangen, die im RDS-TMC-Standard übertragen worden sind. Die empfangenen Verkehrsinformationen werden auf der Anzeigeeinheit 3 dargestellt. Um die Anzahl der darzustellenden Verkehrsinformationen zu beschränken, kann zuvor eine Vorauswahl durch die Recheneinheit 1 getroffen werden. Diese Vorauswahl kann beispielsweise darin bestehen, nur Verkehrsinformationen, die ein bestimmtes geografisches Gebiet betreffen, das für die Routenplanung von Interesse ist, auszugeben. Das interessierende geografische Gebiet kann beispielsweise durch Aufspannen einer Ellipse zwischen dem gegenwärtigen Standort und dem Zielort definiert werden.

Die auf der Anzeigeeinheit 3 dargestellten Verkehrsinformationen, die auch Straßen abseits einer evtl. bereits geplanten Route betreffen, können von dem Benutzer nunmehr bearbeitet werden. Der Benutzer kann hierzu jeweils auswählen, welche der angezeigten Verkehrsinformationen bei der Routenplanung benutzt bzw. nicht benutzt werden sollen. Beispielsweise kann der Benutzer über die Bedieneinheit 2 Verkehrsmeldungen auf der Anzeigeeinheit 3 markieren, die bei der Routenplanung berücksichtigt werden sollen.

Enthalten die Verkehrsinformationen zwar Angaben über die Länge eines Staus, jedoch keine Angaben über die damit verbundene Fahrzeitverlängerung bzw. erzielbare Durchschnittsgeschwindigkeit in der Stauzone, so kann durch den Benutzer über die Bedieneinheit 2 eine erwartete Verzögerungszeit durch den jeweiligen Stau bzw. eine erwartete Durchschnittsgeschwindigkeit in der Stauzone eingegeben werden. Nach Bearbeiten der Verkehrsinformationen startet der Benutzer die dynamische Routenplanung. Das Navigationssystem berechnet nun eine optimale Route unter Berücksichtigung der vom Benutzer ausgewählten und eingegebenen Informationen. Anschließend wird die ausgewählte Route auf der Anzeigeeinheit 3 ausgegeben, und der Benutzer erhält zusätzlich Informationen, inwieweit die einzelnen Verkehrsinformationen bei der Routenplanung berücksichtigt worden sind bzw. inwieweit die berücksichtigten Verkehrsinformationen die Auswahl der Route beeinflusst haben. Die ausgegebene Information kann beispielsweise darin bestehen, dass dem Benutzer mitgeteilt wird, dass die Wartezeit im Stau auf der geplanten Strecke geringer ist als die zusätzliche Fahrzeit auf einer Umleitungsstrecke, oder dass der Stau voraussichtlich bereits nicht mehr vorhanden sein wird, wenn der Fahrer den betreffenden Bereich erreicht.

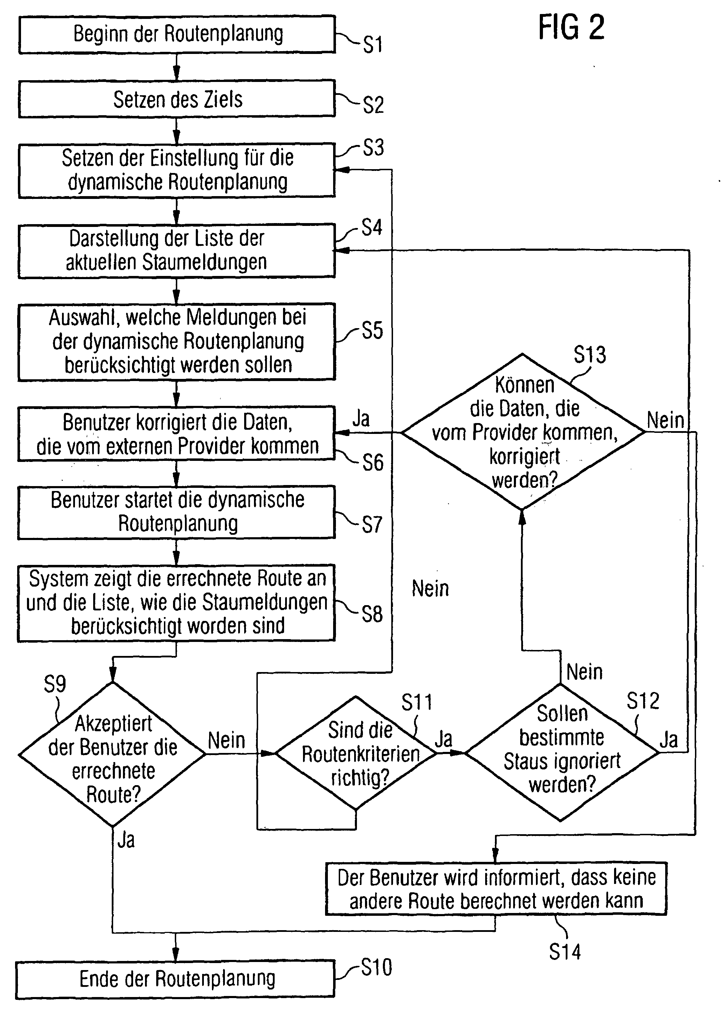

Anhand des in Figur 2 dargestellten Flussdiagramms wird das Verfahren näher erläutert. In Schritt S1 wird die Routenplanung gestartet. In Schritt S2 wird von dem Benutzer das gewünschte Fahrziel eingegeben. In Schritt S3 setzt der Benutzer die gewünschten Einstellungen für die dynamische Routenplanung. Hier kann der Benutzer beispielsweise wählen, ob Verkehrsinformationen überhaupt bei der Routenplanung berücksichtigt werden sollen oder nicht. Weiterhin kann der Benutzer einstellen, ob die schnellste Wegstrecke oder die kürzeste Wegstrecke gewählt werden soll, ob Autobahnen benutzt oder nicht benutzt werden sollen, ob die Wegführung nur über gebührenfreie Straßen führen soll usw.. Weiterhin kann der Benutzer eingeben, welche Fahrzeitverlängerung auf Grund von Verkehrsbehinderungen er gegenüber einer zunächst statisch, d.h. ohne Berücksichtigung von Verkehrsinformationen, geplante Route akzeptiert. Weiterhin kann der Benutzer beispielsweise ein geografisches Gebiet anhand einer angezeigten Landkarte auswählen, so dass nur Verkehrsinformationen innerhalb dieses geografischen Gebietes berücksichtigt werden. Weiterhin kann der Benutzer auswählen, welche Kategorien von Verkehrsinformationen überhaupt berücksichtigt werden sollen. Beispielsweise kann der Benutzer Wetterinformationen ausschließen, da er z.B. weiß, dass ein Schneefallgebiet den gesamten Bereich seiner Fahrstrecke betrifft.

In Schritt S4 werden die empfangenen Staumeldungen auf der Anzeigeeinheit in Form einer Liste dargestellt. In Schritt S5 erfolgt eine Auswahl durch den Benutzer, welche der angezeigten Staumeldungen bei der dynamischen Routenplanung berücksichtigt werden sollen. In Schritt S6 korrigiert oder ergänzt der Benutzer die Verkehrsinformationen, die über den RDS-TMC-Rundfunkempfänger vom externen Provider, hier eine Rundfunkanstalt, übermittelt worden sind. Der Benutzer gibt hier beispielsweise eine erwartete Durchschnittsgeschwindigkeit für einen Stau ein. Anschließend startet der Benutzer in Schritt S7 die dynamische Routenplanung.

In Schritt S8 wird von dem Navigationssystem die errechnete dynamische Route auf der Anzeigeeinheit 3 angezeigt. Weiterhin wird eine Liste angezeigt, aus der der Benutzer ersehen kann, wie die Staumeldungen bei der Routenberechnung berücksichtigt worden sind. In Schritt S9 erfolgt eine Abfrage, ob der Benutzer die errechnete Route akzeptiert. Akzeptiert der Benutzer die berechnete Route, so wird die Routenplanung in Schritt S10 abgeschlossen. Akzeptiert der Benutzer in Schritt S9 die errechnete Route nicht, so erfolgt in Schritt S11 eine Abfrage, ob die Routenkriterien richtig sind. Ist dies nicht der Fall, so wird das Verfahren mit Schritt S3 fortgesetzt, so dass die Einstellungen für die dynamische Routenplanung neu gesetzt werden können. Waren die Routenkriterien jedoch richtig, so wird in Schritt S12 abgefragt, ob bestimmte Staus ignoriert werden sollen. Ist dies der Fall, so wird das Verfahren mit Schritt S4 fortgesetzt, d.h., die Liste der aktuellen Staumeldungen wird angezeigt und kann vom Benutzer bearbeitet werden. Wird die Abfrage in Schritt S12 verneint, so wird in Schritt S13 geprüft, ob die vom Anbieter der Verkehrsinformationen gelieferten Daten korrigiert werden können. Ist dies der Fall, so wird das Verfahren mit Schritt S6 fortgeführt, d.h., der Benutzer kann die Daten erneut korrigieren. Wird dagegen in Schritt S13 festgestellt, dass die Daten nicht korrigiert werden können, so wird in Schritt S14 der Benutzer informiert, dass keine andere Route berechnet werden kann. Anschließend wird die Routenberechnung in Schritt S10 beendet.

Das beschriebene Verfahren kann nicht nur in einem Navigationssystem, wie es in Figur 1 dargestellt ist, durchgeführt werden, sondern auch mit anderen Computersystemen, die eine Routenberechnung unter Berücksichtigung von Verkehrsinformationen erlauben. Beispielsweise kann der Benutzer bereits vor Antritt einer Fahrt am heimischen PC eine Routenplanung durchführen, wobei Verkehrsinformationen über das Internet bezogen werden.
Die so berechnete Route kann dann an ein Navigationssystem in einem Kraftfahrzeug übertragen werden. Dies kann beispielsweise per Funk oder auch mittels eines Speicherelementes erfolgen.

## Patentansprüche

1. Navigationssystem für ein Kraftfahrzeug mit einer Recheneinheit (1), die mit einer Eingabeeinheit (2), einer Anzeigeeinheit (3), einem Speicherelement (5), das eine Landkartendatei enthält, einem Modul zum Empfang von Verkehrsinformationen und Mitteln (6, 7 8) zur Positionsbestimmung verbunden ist und zur Durchführung einer dynamischen Routenplanung unter Berücksichtigung der empfangenen Verkehrsinformationen ausgelegt ist, wobei das Navigationssystem weiterhin Mittel zur Beeinflussung der bei der dynamischen Routenplanung zu berücksichtigenden empfangenen Verkehrsinformationen durch einen Benutzer enthält, **dadurch gekennzeichnet, dass** mindestens ein Entscheidungskriterium für die Berechnung einer neuen Route nach dem Empfang von Verkehrsinformationen voreinstellbar ist.

2. Navigationssystem nach Anspruch 1, **dadurch gekennzeichnet, dass** eine oder mehrere Verkehrsinformationen aus den empfangenen Verkehrsinformationen derart auswählbar sind, dass die ausgewählten Verkehrsinformationen bei der Routenberechnung berücksichtigt bzw. nicht berücksichtigt werden.

3. Navigationssystem nach einem der vorhergehenden Ansprüche, **dadurch gekennzeichnet, dass** Informationen über die bei der Routenberechnung berücksichtigte bzw. nicht berücksichtigte Verkehrsinformation ausgegeben, insbesondere auf der Anzeigeeinheit (3) angezeigt werden.

4. Navigationssystem nach einem der vorhergehenden Ansprüche, **dadurch gekennzeichnet, dass** das Entscheidungskriterium eine maximal durch den Benutzer akzeptierte Fahrzeitverlängerung aufgrund einer mit den Verkehrsinformationen übermittelten Verkehrsbehinderung auf einer bereits geplanten Fahrstrecke ist.

5. Navigationssystem nach einem der vorhergehenden Ansprüche, **dadurch gekennzeichnet, dass** zunächst eine statische Route ohne Berücksichtigung von Verkehrsinformationen und anschließend eine dynamische Route mit Berücksichtigung der empfangenen Verkehrsinformationen berechnet wird.

6. Navigationssystem nach einem der vorhergehenden Ansprüche, **dadurch gekennzeichnet, dass** das Modul zum Empfang von Verkehrsinformationen ein RDS-, insbesondere ein RDS-TMC-Rundfunkempfänger (9) ist.

7. Navigationssystem nach einem der vorhergehenden Ansprüche 1 bis 6, **dadurch gekennzeichnet, dass** das Modul zum Empfang von Verkehrsinformationen ein Mobiltelefon ist.

8. Navigationssystem nach einem der vorhergehenden Ansprüche, **dadurch gekennzeichnet, dass** auch Verkehrsinformationen zu abseits von bereits geplanten Routen liegenden Straßen angezeigt werden und auswählbar und beeinflussbar sind.

9. Navigationssystem nach einem der vorhergehenden Ansprüche, **dadurch gekennzeichnet, daß** der Benutzer eine zu berücksichtigende Fahrzeitverlängerung bei einer empfangenen Verkehrsinformation beeinflussen kann.

## Claims

1. Navigation system for a motor vehicle having a computing unit (1) which is connected to an input unit (2), a display unit (3), a memory element (5) which contains a map file, a module for receiving traffic information and means (6, 7, 8) for determining position, and is configured to carry out dynamic route planning taking into account the received traffic information, the navigation system also containing means with which a user can influence the received traffic information which is to be taken into account in the dynamic route planning, **characterized in that** at least one decision criterion for the calculation of a new route after the reception of traffic information can be preset.

2. Navigation system according to Claim 1, **characterized in that** one or more traffic information items can be selected from the received traffic information in such a way that the selected traffic information is taken into account or is not taken into account in the calculation of a route.

3. Navigation system according to one of the preceding claims, **characterized in that** information relating to the traffic information which is taken into account or not taken into account in the calculation of the route is output, in particular is displayed on the display unit (3).

4. Navigation system according to one of the preceding claims, **characterized in that** the decision criterion is a maximum travel time extension accepted by the user owing to a traffic obstruction, transmitted by means of the traffic information, on an already planned section of a route.

5. Navigation system according to one of the preceding claims, **characterized in that** at first a static route is calculated without taking into account traffic information, and then a dynamic route is calculated taking into account the received traffic information.

6. Navigation system according to one of the preceding claims, **characterized in that** the module for receiving traffic information is an RDS radio receiver, in particular an RDS-TMC radio receiver (9).

7. Navigation system according to one of the preceding claims, **characterized in that** the module for receiving traffic information is a mobile phone.

8. Navigation system according to one of the preceding claims, **characterized in that** traffic information relating to roads outside already planned routes is also displayed and can be selected and influenced.

9. Navigation system according to one of the preceding claims, **characterized in that** the user can influence a travel time extension which is to be taken into account and is present in received traffic information.

## Revendications

1. Système de navigation destiné à un véhicule automobile, comportant une unité d'ordinateur (1), qui est reliée à une unité de saisie (2), à une unité d'affichage (3), à un é lément de mémorisation (5), lequel renferme u n fichier d e carte topographique, à un module, destiné à la réception d'informations relatives au trafic routier, et à des moyens (6, 7, 8) permettant de déterminer la position, et qui est conçue pour exécuter une planification dynamique d'itinéraire tout en tenant compte des informations relatives au trafic routier reçues, le système de navigation renfermant, en outre, des moyens permettant à un utilisateur d'influencer les informations relatives au trafic routier reçues et qu'il faut prendre en compte pour la planification dynamique d'itinéraire
**caractérisé par le fait que**, au moins, un critère de décision pour le calcul d'un nouvel itinéraire peut être préréglé après la réception d'informations relatives au trafic routier.

2. Système de navigation selon la revendication 1 **caractérisé par le fait que** une ou plusieurs informations relatives au trafic routier peuvent être sélectionnées parmi les informations relatives au trafic routier reçues de telle sorte que les informations relatives au trafic routier sélectionnées sont prises en compte ou non pour le calcul de l'itinéraire.

3. Système de navigation selon l'une des revendications précédentes **caractérisé par le fait que** des informations, concernant les informations relatives au trafic routier prises en compte ou non prises en compte pour le calcul de l'itinéraire, sont éditées, notamment affichées sur l'unité d'affichage (3).

4. Système de navigation selon l'une des revendications précédentes **caractérisé par le fait que** le critère de décision est une prolongation maximum de la durée du trajet acceptée par l'utilisateur, due à une perturbation du trafic routier transmise avec les informations relatives au trafic routier, sur un itinéraire déjà planifié.

5. Système de navigation selon l'une des revendications précédentes **caractérisé par le fait que**, d'abord, un itinéraire statique est calculé sans tenir compte d'informations relatives au trafic routier et, ensuite, un itinéraire dynamique e st calculé en tenant compte d es informations relatives au trafic routier reçues.

6. Système de navigation selon l'une des revendications précédentes **caractérisé par le fait que** le module permettant de recevoir des informations relatives au trafic routier est un récepteur de radiodiffusion à RDS, notamment un récepteur de radiodiffusion à RDS-TMC (9).

7. Système de navigation selon l'une des revendications précédentes 1 à 6 **caractérisé par le fait que** le module permettant de recevoir des informations relatives au trafic routier est un téléphone mobile.

8. Système de navigation selon l'une des revendications précédentes **caractérisé par le fait que** des informations relatives au trafic routier concernant des routes se trouvant à l'écart d'itinéraires déjà planifiés sont également affichées, qu'elles peuvent être sélectionnées et qu'elles peuvent être influencées.

9. Système de navigation selon l'une des revendications précédentes **caractérisé par le fait que** l'utilisateur peut influencer une prolongation de la durée du trajet à prendre en compte à la suite de la réception d'une information relative au trafic routier.
